# EUROPÄISCHE PATENTANMELDUNG

(11) **EP 1 912 356 A1**
(43) Veröffentlichungstag der Anmeldung: **16.04.2008**
(21) Anmeldenummer: 07019500.3
(22) Anmeldetag: 05.10.2007
(51) Int. Cl.: H04B 10/18, H04K 1/00, H04L 9/00

(54) **Verfahren und System zur verschlüsselten optischen Datenübertragung**

(30) Priorität: 12.10.2006 DE 102006048793
(71) Anmelder: Deutsche Telekom AG, 53113 Bonn (DE)
(72) Erfinder: Gunkel, Matthias, Dr., 64291 Darmstadt (DE); Leppla, Ralph, Dr., 64285 Darmstadt (DE); Schneiders, Malte, 64289 Darmstadt (DE); Vorbeck, Sascha, 64347 Griesheim (DE); Weiershausen, Werner, 64859 Eppertshausen (DE)

(57) **Zusammenfassung**

Zur Vereinfachung und Verbesserung der Verschlüsselung von Daten in optischen Datenübertragungssystemen sieht die Erfindung eine Verfahren zur verschlüsselten Datenübertragung über eine optische Übertragungsstrecke (300) vor, bei dem ein mittels einer vorgegebenen wellenlängenabhängigen Signalverzerrung verschlüsseltes optisches Datensignal (500) erzeugt wird, dieses über die optische Übertragungsstrecke (300) übertragen wird, und das empfangene optische Datensignal (500) durch Kompensieren der vorgegebenen wellenlängenabhängigen Signalverzerrung wieder entschlüsselt wird.

Die Erfindung sieht ferner ein zur Durchführung des Verfahrens ausgebildetes Datenübertragungssystem vor.

## Beschreibung

Die Erfindung betrifft allgemein optische Datenübertragungssysteme, und insbesondere ein Verfahren und ein System zur verschlüsselten Datenübertragung über eine optische Übertragungsstrecke.

In heutigen optischen Übertragungsnetzen werden Daten über optische Kanäle mit Kanaldatenraten von bis zu 40 Gbit/s übertragen. Im Forschungsstadium befinden sich zur Zeit bereits Kanaldatenraten von 80 und 160 Gbit/s. Viele der übermittelten Daten enthalten vertrauliche, sensitive oder geheime Informationen und,müssen vor dem Zugriff Dritter geschützt werden.

Dies geschieht zur Zeit durch sichere, elektronische Kodierverfahren. Die Entwicklung elektronischer Schaltkreise ist allerdings noch nicht so weit fortgeschritten, dass bei den heutigen und zukünftigen Datenraten die Kodierung in einem Schritt durchgeführt werden kann. Die Daten werden umständlich in kleineren Datenströmen verschlüsselt und anschließend durch Multiplexen zu größeren Datenraten zusammengefasst.

Wie jedes Verschlüsselungsverfahren, so können die bisherigen elektronischen Verfahren ebenfalls in endlicher Zeit, auch von unberechtigten Dritten, entschlüsselt werden.
Der Erfindung liegt daher die Aufgabe zugrunde, einen Weg aufzuzeigen, wie die Verschlüsselung von Daten in optischen Datenübertragungssystemen verbessert und/oder vereinfacht werden kann.

Diese Aufgabe wird durch ein Verfahren gemäß Anspruch 1, sowie ein Datenübertragungssystem nach Anspruch 14 gelöst. Vorteilhafte Ausführungsformen und Weiterbildungen sind in den jeweiligen Unteransprüchen umschrieben.

Dementsprechend umfasst ein erfindungsgemäßes Verfahren zur verschlüsselten Datenübertragung über eine optische Übertragungsstrecke das Erzeugen eines mittels einer vorgegebenen wellenlängenabhängigen Signalverzerrung verschlüsselten optischen Datensignals, das Übertragen des verschlüsselten optischen Datensignals über die optische Übertragungsstrecke, und das Entschlüsseln des empfangenen optischen Datensignals durch Kompensieren der vorgegebenen wellenlängenabhängigen Signalverzerrung.

Besonders vorteilhaft entspricht die vorgegebene wellenlängenabhängige Signalverzerrung im wesentlichen einer dispersionsbedingten Signalverzerrung, insbesondere einer durch chromatische Dispersion hervorgerufenen Signalverzerrung. Die vorgegebene wellenlängenabhängige Signalverzerrung wird daher im Folgenden auch als Vorkompensation einer chromatischen Dispersion oder als akkumulierte chromatische Dispersion bezeichnet.

Die chromatische Dispersion führt in optischen Übertragungssystemen hoher Datenrate zu einer signifikanten Degradation der Signalqualität, wenn die chromatische Dispersion nicht vollständig kompensiert wird. Die Degradation nimmt dabei quadratisch mit der Datenrate zu, so dass die Signaldegradation für hohe Datenraten besonders groß ist.

Es ist bekannt, in optischen Übertragungssystemen eine Vorkompensation der chromatischen Dispersion vorzunehmen, um die auf der optischen Übertragungsstrecke erwartete chromatische Dispersion auszugleichen und am Empfänger ein unverzerrtes Signal zu erhalten, welches im wesentlichen keine akkumulierte chromatische Dispersion aufweist. Alternativ ist bekannt, auf der Übertragungsstrecke in vorgegebenen Abständen Kompensatoren zum Ausgleich der chromatischen Dispersion vorzusehen, beispielsweise in Form von dispersionskompensierenden Fasern. Das Verfahren sieht vorzugsweise eine dispersionskompensierte optische Übertragungsstrecke vor.

Das vorliegend beschriebene Verfahren sieht somit vorzugsweise eine kontrollierte und adaptierte Fehlkompensation der chromatischen Dispersion am Sender eines optischen Übertragungssystems vor, resultierend in einer kontrollierten und adaptierten Fehldispersion am Empfänger des optischen Übertragungssystems, wobei eine am Sender eingestellte Fehldispersion durch einen Kompensator am Empfänger wieder kompensiert wird.

Die optischen Signale können empfängerseitig nur entschlüsselt und fehlerfrei empfangen werden, wenn das Maß der senderseitig erzeugten wellenlängenabhängigen Signalverzerrung bekannt ist und kompensiert werden kann. Zu diesem Zweck kann das senderseitig vorgegebene Maß der wellenlängenabhängigen Signalverzerrung vorteilhaft einmalig über einen separaten, sicheren Übertragungsweg vom Sender zum Empfänger übertragen werden. Vorteilhaft kann das Maß der Signalverzerrung auch zeitlich variiert und dementsprechend regelmäßig vom Sender zum Empfänger übertragen werden.
Besonders vorteilhaft erfolgt das Erzeugen des verschlüsselten optischen Datensignals durch Verzerren eines von einem optischen Sender generierten unverzerrten optischen Datensignals, da auf diese Weise bestehende Sendersysteme verwendet werden können. Dementsprechend erfolgt das Erzeugen des verschlüsselten optischen Datensignals und/oder das Entschlüsseln des empfangenen optischen Datensignals vorzugsweise mittels eines elektrisch regelbaren, optischen Elementes, beispielsweise ausgebildet als Fasergitter, virtuell abgebildete Phasenmatrix (Virtual imaged phase array; VIPA), Phasenmodulator, Gires-Tournois-Etalon oder Mach-Zehnder-Interferometer.

Die Anpassung der chromatischen Dispersion mit optischen Komponenten ist weitgehend unabhängig von der Datenrate des Signals, so dass auch hohe Datenraten verschlüsselt werden können und nicht aus verschlüsselten Kanälen mit geringeren Datenraten zusammengesetzt werden müssen. Da die optischen Komponenten vorteilhaft breitbandig ausgelegt sind, kann nicht nur ein optischer Kanal, sondern gleich das gesamte Übertragungsband, beispielsweise im Wellenlängenbereich von 1530 nm bis 1565 nm, mit einer Vielzahl von Kanälen von nur einer optischen Komponente verschlüsselt und empfängerseitig von nur einer optischen Komponente wieder entschlüsselt werden.

Die Verschlüsselung mittels kontrollierter, adaptierter Dispersionseinstellung am Sender und Empfänger bietet somit den Vorteil besonders geringer Kosten pro Übertragungskanal.

Neben den optischen Elementen kann die Adaption der chromatischen Dispersion am Sender und Empfänger auch im elektrischen Bereich erfolgen. Die elektrische Vorkompensation kann dabei durch eine entsprechende Ansteuerung eines Modulators mit einem komplexen, elektrischen Signal erfolgen. Dementsprechend umfasst das Verfahren vorteilhaft das Erzeugen des verschlüsselten optischen Datensignals mittels einer gesteuerten Modulation des von einer Lichtquelle eines optischen Senders erzeugten Lichtes.

Die Kompensation der eingestellten Vorkompensation am Empfänger kann entsprechend durch den Einsatz elektrischer Filter realisiert werden. Dazu sieht das Verfahren vorteilhaft das Umwandeln des empfangenen optischen Signals in ein elektrisches Signal und das Kompensieren der Signalverzerrung mittels einer regelbaren elektronischen Schaltung vor.

Wie jedes kodierte Signal, so kann auch ein durch eine vorgegebene wellenlängenabhängige Signalverzerrung verzerrtes Signal rekonstruiert werden, wenn das Signal abgehört, der Wert der vorgegebenen wellenlängenabhängigen Signalverzerrung erraten und am Empfänger eingestellt wird. Eine Rekonstruktion des Signals durch Dritte kann allerdings deutlich erschwert werden, wenn das Maß der wellenlängenabhängigen Signalverzerrung am Sender und Empfänger synchron verändert wird. Dementsprechend umfasst das Verfahren vorteilhaft das zeitliche Variieren des Maßes der vorgegebenen wellenlängenabhängigen Signalverzerrung, und das Übertragen eines Synchronisationssignals zum Anpassen der empfängerseitigen Kompensation der vorgegebenen wellenlängenabhängigen Signalverzerrung an die zeitliche Variation. Bei Einsatz elektrisch regelbarer, optischer Elemente zur senderseitigen Signalverzerrung und/oder empfängerseitigen Kompensation werden diese optischen Elemente beispielsweise jeweils in zeitlichen Abständen auf einen neuen Kompensationswert eingestellt. Dies ist bei den oben beschriebenen Typen einsetzbarer optischer Elemente in der Regel innerhalb weniger Millisekunden möglich.

Durch die zeitliche Variation der als Dispersionswert vorgegebenen wellenlängenabhängigen Signalverzerrung ist eine Dekodierung des Signals nahezu unmöglich, da zum einen der mögliche Bereich der akkumulierten Dispersion von Dritten nicht in kurzer Zeit durchprobiert werden kann und zum anderen aus dem Signal nicht erkannt werden kann, für welchen Zeitschlitz der Dispersionswert konstant ist und zu welchem Zeitpunkt der Dispersionswert am Sender verändert wird.

Eine Synchronisation des Senders und Empfängers kann vorteilhaft dadurch erreicht werden, dass der Umschaltzeitpunkt mit dem kodierten Signal übertragen wird, das verschlüsselte optische Datensignal somit das Synchronisationssignal umfasst. Das Synchronisationssignal kann beispielsweise in den nicht belegten Bytes im Übertragungsprotokoll des übertragenen Signals übertragen werden. Alternativ sieht das Verfahren vorteilhaft vor, das Synchronisationssignal in einem optischen Überwachungskanal (Optical Supervisory Channel, OSC) zu übertragen, der typischerweise in jedem optischen Ubertragungssystem installiert ist. Ein solcher Überwachungskanal wird in der Regel außerhalb des für Nutzsignale vorgesehenen Frequenzbandes übertragen und dient zur Kommunikation der einzelnen optischen Netzelemente untereinander und mit dem übergeordneten Managementsystem des optischen Netzes.

Besonders vorteilhaft erfolgt das zeitliche Variieren des Maßes der vorgegebenen wellenlängenabhängigen Signalverzerrung durch Festlegen diskreter Werte für das Maß der Signalverzerrung zu vorgegebenen Zeitpunkten. Dementsprechend umfasst das Synchronisationssignal vorzugsweise Zeitinformationen, durch die wenigstens ein Zeitpunkt definiert wird, sowie wenigstens einen, dem Zeitpunkt zugeordneten Verzerrungswert, der das Maß der Signalverzerrung definiert, welches ab diesem Zeitpunkt verwendet werden soll.

Vorteilhaft umfasst das Synchronisationssignal eine Information, aus der wenigstens eine Listenposition ermittelt werden kann. Anhand dieser Listenposition wird dann das Maß der vorgegebenen wellenlängenabhängigen Signalverzerrung aus einer entsprechenden Werteliste entnommen. Zu diesen Zweck ist eine entsprechende Werteliste sender- und empfängerseitig identisch hinterlegt.

Alternativ ist sender- und empfängerseitig eine vorgegebene Rechenvorschrift hinterlegt, mittels derer das Maß der vorgegebenen wellenlängenabhängigen Signalverzerrung in Abhängigkeit wenigstens eines Parameters berechenbar ist.

In dieser Ausführungsform des Verfahrens umfasst das Synchronisationssignal den wenigstens einen Parameter.

Besonders vorteilhaft wird das Maß der vorgegebenen wellenlängenabhängigen Signalverzerrung senderseitig in vorgegebenen zeitlichen Abständen zufällig festgelegt, um die Sicherheit der Datenübertragung weiter zu erhöhen.

Ein erfindungsgemäßes Datenübertragungssystem zur verschlüsselten optischen Datenübertragung umfasst einen Sender, der über eine optische Übertragungsstrecke mit einem Empfänger verbunden ist, senderseitige Mittel zum Erzeugen eines durch eine vorgegebene wellenlängenabhängige Signalverzerrung verschlüsselten optischen Datensignals, und empfängerseitige Mittel zum Entschlüsseln eines empfangenen optischen Datensignals durch Kompensieren der vorgegebenen wellenlängenabhängigen Signalverzerrung.

Vorteilhaft umfassen die senderseitigen Mittel zum Erzeugen eines verschlüsselten optischen Signals ein zwischen den Sender und die Übertragungstrecke geschaltetes elektrisch regelbares, optisches Element. Die empfängerseitigen Mittel zum Entschlüsseln eines verschlüsselten optischen Signals umfassen dementsprechend vorzugsweise korrespondierend ein elektrisch regelbares, optisches Element, welches zwischen die Übertragungstrecke und den Empfänger geschaltet ist. Das jeweilige optische Element ist vorzugsweise als Fasergitter wie beispielsweise als Faser-Bragg-Gitter, virtuell abgebildete Phasenmatrix (Virtual imaged phase array; VIPA), Phasenmodulator, Gires-Tournois-Etalon oder Mach-Zehnder-Interferometer ausgebildet.

Alternativ kann die Verschlüsselung auch bereits im optischen Sender vorgenommen werden. Zu diesem Zweck umfassen die senderseitigen Mittel zum Erzeugen eines verschlüsselten optischen Signals vorzugsweise Mittel zum elektrischen Ansteuern eines im Sender angeordneten optischen Modulators, wobei der Modulator beispielsweise als Mach-Zehnder-Modulator ausgebildet ist und die Mittel zum elektrischen Ansteuern dazu ausgebildet sind, in Abhängigkeit von zu übertragenden Daten ein Steuersignal zu erzeugen, das ein Erzeugen eines mit einer vorgegebenen wellenlängenabhängigen Signalverzerrung verschlüsselten optischen Datensignals durch den Modulator bewirkt.

Korrespondierend sind empfängerseitig vorzugsweise Mittel zum Umwandeln eines empfangenen verschlüsselten optischen Signals in ein verschlüsseltes elektrisches Signal und wenigstens eine regelbare elektronische Schaltung zum Kompensieren der Signalverzerrung des elektrischen Signals vorgesehen, wobei die regelbare elektronische Schaltung beispielsweise als ein als Dispersionskompensator wirkendes elektronisches Filter ausgebildet ist.

Das Erzeugen eines verschlüsselten optischen Signals durch senderseitiges elektrisches Ansteuern eines Modulators beziehungsweise das Entschlüsseln durch eine entsprechende empfängerseitige regelbare elektronische Schaltung erfolgt bevorzugt individuell für jeden Datenübertragungskanal, da typischerweise für jeden Kanal im Sender ein separater Modulator und im Empfänger ein separater Demodulator vorgesehen ist. Ferner sind die senderseitigen Mittel zum Erzeugen eines verschlüsselten optischen Signals sowie die korrespondierende empfängerseitige regelbare elektronische Schaltung vorzugsweise an die Datenrate des jeweiligen Datenübertragungskanals angepasst.

Um die Sicherheit der Datenübertragung zu erhöhen, sind die senderseitigen Mittel zum Erzeugen eines verschlüsselten optischen Datensignals ferner vorteilhaft dazu ausgebildet, das Maß der vorgegebenen wellenlängenabhängigen Signalverzerrung zeitlich zu variieren und ein mit der zeitlichen Variation korrespondierendes Synchronisationssignal zu erzeugen und zum Empfänger zu senden. Entsprechend sind die empfängerseitigen Mittel zum Entschlüsseln eines empfangenen optischen Datensignals bevorzugt dazu ausgebildet, in Antwort auf Empfang eines solchen Synchronisationssignals die Kompensation der vorgegebenen wellenlängenabhängigen Signalverzerrung automatisch anzupassen.

Vorteilhaft ist sender- und empfängerseitig jeweils ein Speicher vorgesehen, in welchen jeweils identische Auswahllisten zur Auswahl des Maßes der vorgegebenen wellenlängenabhängigen Signalverzerrung abgelegt sind. Auf diese Weise muss bei einer Variation der Signalverzerrung nur die jeweilige Listenposition im Synchronisationssignal übertragen werden, wodurch die für die Synchronisation zu übertragende Datenmenge reduziert wird. Zusätzlich ist es einem Dritten, selbst wenn es diesem möglich war, ein Teilsignal zu entschlüsseln und somit Zugriff auf die übertragene Listenposition zu erhalten, ohne die Liste nicht möglich, das folgende, mit der geänderten Signalverzerrung verschlüsselte Signal zu entschlüsseln.

Alternativ ist sender- und empfängerseitig eine identische Rechenvorschrift zur Berechnung des Maßes der vorgegebenen wellenlängenabhängigen Signalverzerrung in Abhängigkeit wenigstens eines Parameters in einem jeweiligen Speicher abgelegt, wobei in dieser Ausführungsform Synchronisationssignale erzeugt werden, welche den jeweiligen Parameter umfassen.

Um Angriffe durch Dritte weiter zu erschweren, ist senderseitig mit besonderem Vorteil ein Zufallsgenerator zur zufälligen Festlegung des Maßes der vorgegebenen wellenlängenabhängigen Signalverzerrung vorgesehen. Der zufällig festgelegte Wert wird jeweils innerhalb des Synchronisationssignals zum Empfänger übertragen. Die zufällige Festlegung erfolgt vorzugsweise in vorgegebenen zeitlichen Abständen, wobei auch die Zeitabstände zufällig gewählt sein können. Selbstverständlich lässt sich diese Variante auch mit den beiden zuvor beschriebenen Ausführungsformen kombinieren, so dass eine Listenposition einer sender- und empfängerseitig gespeicherten Werteliste oder wenigstens ein zur Berechnung des Maßes der Signalverzerrung mit einer sender- und empfängerseitig gespeicherten Rechenvorschrift geeigneter Parameter mit Hilfe des Zufallsgenerators ermittelt und im Synchronisationssignal zum Empfänger übertragen wird.

Die Erfindung wird nachfolgend anhand bevorzugter Ausführungsformen und unter Bezugnahme auf die beigefügten Zeichnungen näher beschrieben. Dabei bezeichnen gleiche Bezugszeichen in den Zeichnungen gleiche oder ähnliche Teile.

Es zeigen:
- Fig.1: eine schematische Darstellung einer ersten bevorzugten Ausführungsform eines Datenübertragungssystems,
- Fig.2: eine schematische Darstellung einer zweiten bevorzugten Ausführungsform eines Datenübertragungssystems,
- Fig. 3: eine schematische Darstellung einer beispielhaften Ausführung des Senders der in Fig. 1 dargestellten ersten Ausführungsform,
- Fig. 4: eine schematische Darstellung einer beispielhaften Ausführung des Empfängers der in Fig. 1 dargestellten ersten Ausführungsform,
- Fig. 5: eine schematische Darstellung einer beispielhaften Ausführung des Senders der in Fig. 2 dargestellten zweiten Ausführungsform,
- Fig. 6: eine schematische Darstellung einer beispielhaften Ausführung des Empfängers der in Fig. 2 dargestellten zweiten Ausführungsform,
- Fig. 7: einen beispielhaften Signalverlauf an einem ersten, in Fig. 1 mit Bezugszeichen 410 bezeichneten Messpunkt, und
- Fig. 8: einen beispielhaften Signalverlauf an einem zweiten, in Fig. 1 mit Bezugszeichen 420 bezeichneten Messpunkt.

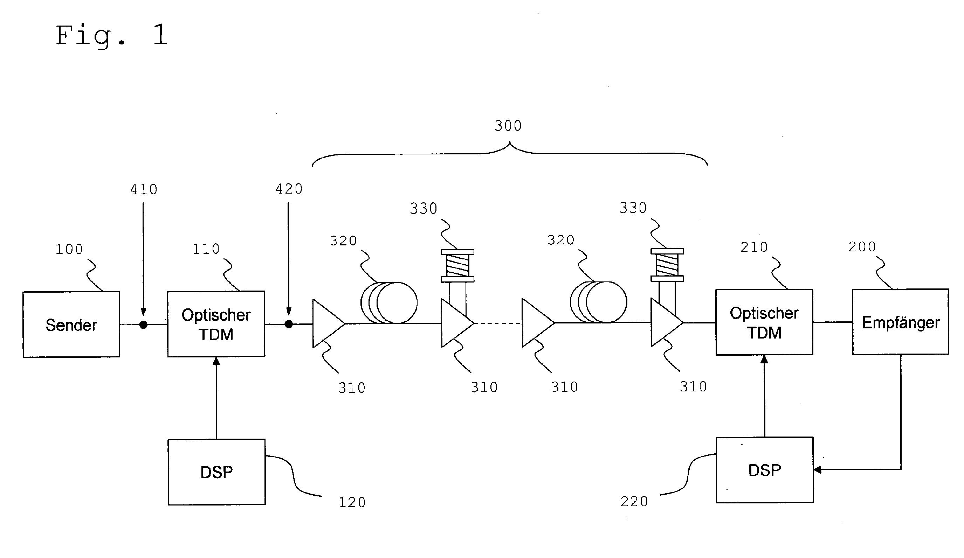

Bei dem in Fig. 1 dargestellten Ausführungsbeispiel wird hinter einem optischen Sender 100 mit Hilfe einer optischen Komponente 110 eine vorgegebene wellenlängenabhängige Signalverzerrung vorgenommen, welche vorzugsweise einem vorgegebenen Wert einer akkumulierten chromatischen Dispersion entspricht, d.h. einer Signalverzerrung wie sie bei Durchlaufen einer optischen Faser auftreten würde, die eine chromatische Dispersion aufweist. Als optisches, adaptives Element (Tunable Dispersion Module; TDM) 110 können am Markt erhältliche Komponenten, wie zum Beispiel einstellbare Fasergitter, Virtual imaged phase arrays (VIPA), Phasenmodulatoren (PM), Gires-Tournois Etalons, einstellbare MZI oder sonstige interferometrische Aufbauten eingesetzt werden.

Das optische Element 110 wird durch eine Steuereinheit 120, welche einen digitalen Signalprozessor (DSP) aufweist, geregelt und so das Maß der vorgegebenen wellenlängenabhängigen Signalverzerrung festgelegt.

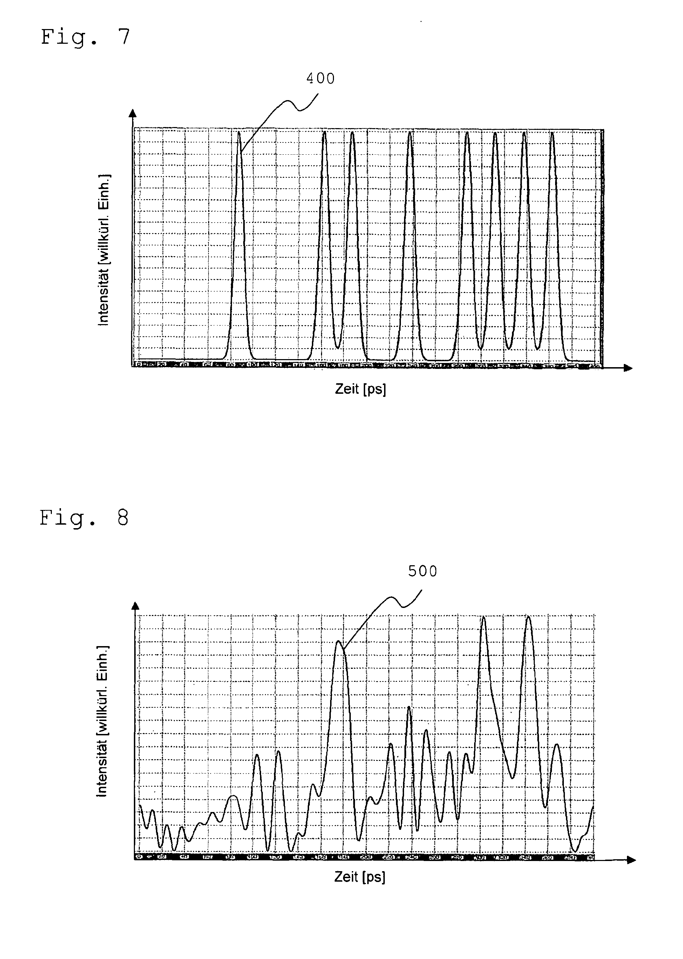

Der Signalverlauf an den Messpunkten 410 und 420, d.h. vor bzw. nach Erzeugen des verschlüsselten optischen Datensignals mit vorgegebener wellenlängenabhängiger Signalverzerrung ist in den Figuren 7 bzw. 8 dargestellt.

Die vom optischen Sender 100 erzeugten unverzerrten Pulse am Messpunkt 410 sind in Fig. 7 dargestellt. Aufgetragen ist die Intensität in willkürlichen Einheiten in Abhängigkeit der Zeit in Pikosekunden. Der Signalverlauf 400 zeigt eine klare Pulsfolge mit einer Datenrate von 40 Gbit/s und einer akkumulierten chromatischen Dispersion von im wesentlichen 0.

Der Signalverlauf am Messpunkt 420 hinter dem optischen Element 110, mittels dessen die Signalverzerrung vorgenommen wird, ist in Fig. 8 dargestellt. Im vorliegenden Ausführungsbeispiel ist das optische Element 110, gesteuert durch die Steuereinheit 120, auf eine wellenlängenabhängige Signalverzerrung eingestellt, welche einer akkumulierten chromatischen Dispersion von im wesentlichen 1000 ps/nm entspricht. Ein entsprechend verzerrter Signalverlauf 500 ist in Fig. 8 zu erkennen.

Die Pulse überlappen sich stark und eine Pulsfolge ist nicht mehr erkennbar. Die originale Pulsfolge 400, wie in Fig. 7 dargestellt, kann ohne Entzerrung des verzerrten Signals 500 nicht mehr rekonstruiert oder fehlerfrei empfangen werden. Das optische Signal ist somit verschlüsselt.

Wieder bezugnehmend auf Fig. 1 ist die chromatische Dispersion auf der Übertragungsstrecke 300 zwischen dem Sender 100 und dem Empfänger 200 in der Regel vollständig kompensiert. Zu diesem Zweck ist die Übertragungsstrecke 300 aus Segmenten aufgebaut, die jeweils zwei Verstärker 310, eine zwischen den Verstärkern 310 angeordnete Übertragungsfaser 320, sowie jeweils eine dispersionskompensierende Faser 330 aufweisen.

Für einen fehlerfreien Empfang ist empfängerseitig ein optisches, adaptives Element (Tunable Dispersion Module; TDM) 210 angeordnet, das die akkumulierte Dispersion, welche senderseitig eingestellt wurde, wieder kompensiert. Das optische Element wird von einer zugeordneten Steuereinheit 220 automatisch geregelt. Das durch das optische Element 210 entzerrte optische Datensignal wird dem Empfänger 200 zur weiteren Auswertung zugeführt. Da die optischen Komponenten 110 und 210 von der Datenrate unabhängig sind, können besonders vorteilhaft auch sehr hohe Datenraten in einem Schritt mit nur jeweils einer sender- und empfängerseitigen optischen Komponente ver- und entschlüsselt werden. Darüber hinaus können die vorgesehenen optischen Komponenten 110 und 210 so breitbandig ausgebildet sein, dass das gesamte Übertragungsband einer Glasfaser mit nur jeweils einer Komponente ver- und entschlüsselt werden kann.

Besonders vorteilhaft wird die senderseitige wellenlängenabhängige Signalverzerrung und die korrespondierende empfängerseitige Kompensation der Signalverzerrung zeitlich variiert. Zu diesem Zweck weist die Steuereinheit 120 vorzugsweise einen nicht dargestellten Zufallsgenerator auf, der in vorgegebenen zeitlichen Abständen einen Zufallswert generiert. Der Zufallswert gibt das Maß der wellenlängenabhängigen Signalverzerrung entweder direkt an oder alternativ eine Listenposition in einer Liste mit möglichen Werten der Signalverzerrung oder einen Parameter zur Berechnung eines Wertes für die Signalverzerrung mittels einer vorgegebenen Rechenvorschrift. Entsprechende Wertelisten oder Rechenvorschriften sind gegebenenfalls in identischer Weise in jeweils einem nicht dargestellten Speicher der Steuereinheiten 120 und 220 hinterlegt.

Der Wertebereich, aus dem der Zufallswert ermittelt wird, ist bei der Variante der direkten Übertragung des Maßes der Signalverzerrung durch festgelegte Grenzen abhängig vom einstellbaren Wertebereich der optischen Elemente 110 und 210, bei Verwendung einer Liste durch die Anzahl der Listenpositionen und bei Verwendung einer vorgegebenen Rechenvorschrift durch einen festgelegten Parameterraum gegeben.

Bei der Variante, bei der die absoluten Werte der wellenlängenabhängigen Signalverzerrung oder der akkumulierten Dispersion in identischen Listen festgelegt sind, wird in der Steuereinheit 120 zufällig ein Listenwert ausgewählt, der absolute Wert der Signalverzerrung aus der gespeicherten Liste ausgelesen und das optische Element 110 in Abhängigkeit dieses Wertes ab einem vorgegebenen Zeitpunkt entsprechend angesteuert. Zusätzlich wird ein Synchronisationssignal in der Steuereinheit 120 erzeugt, weiches die zufällig ausgewählte Listenposition und Informationen über den vorgegebenen Zeitpunkt beinhaltet, ab dem die Verschlüsselung mit dem neu gewählten Wert für die Signalverzerrung durchgeführt werden soll. Im dargestellten Ausführungsbeispiel wird dieses Synchronisationssignal von der Steuereinheit 120 dem Sender 100 zugeführt und innerhalb des Datensignals übertragen. Bei Verwendung einer Rechenvorschrift zur Ermittlung der absoluten Werte der wellenlängenabhängigen Signalverzerrung wird in der Steuereinheit 120 eine vorgegebene Anzahl von Berechnungsparametern zufällig in einem festgelegten Parameterraum ermittelt. In den beiden Steuereinheiten 120 und 220 ist in dieser Variante eine identische Rechenvorschrift abgelegt. Die ermittelten Berechnungsparameter bilden die Eingangsparameter der Rechenvorschrift. Die Berechnungsparameter werden auch in dieser Variante zum Sender 100 geleitet und innerhalb des Datensignals zum Empfänger 200 übertragen.

Die jeweils empfangenen Werte werden vom Empfänger 200 zur Steuereinheit 220 geleitet, in welcher aus den empfangenen Werten der neu zu verwendende Wert der wellenlängenabhängigen Signalverzerrung ermittelt wird, je nach Variante gegebenenfalls unter Zugriff auf eine gespeicherte Werteliste oder unter Verwendung einer gespeicherten Rechenvorschrift. Auf der Grundlage des ermittelten Wertes der wellenlängenabhängigen Signalverzerrung wird das optische Element 210 ab einem vorgegebenen Zeitpunkt entsprechend der zeitlichen Synchronisation angesteuert.

Zur Synchronisation können auch separate Synchronisationssignale zum einen für die zeitliche Synchronisation und zum anderen zur Übertragung der absoluten Werte der wellenlängenabhängigen Signalverzerrung bzw. der Listenposition oder Berechnungsparameter eingesetzt werden. Auf diese Weise kann zunächst der neue Wert für die wellenlängenabhängige Signalverzerrung nach entsprechender Datenübertragung in den Steuereinheiten 120 und 220 gespeichert und nachfolgend durch ein Synchronisationssignal aktiviert werden.

Da die gesamte Übertragung verschlüsselt durchgeführt wird, können auch die Synchronisationssignale bzw. die Werte, Listenpositionen oder Berechnungsparameter für die Anpassung der Signalverzerrung nicht von unberechtigten Dritten identifiziert werden.

Das Synchronisationssignal kann alternativ auch über einen Überwachungskanal der optische Übertragungsstrecke zum Empfänger übertragen werden. Ferner können Sender 100 und Steuereinheit 120 bzw. Empfänger 200 und Steuereinheit 220 in einem Bauteil integriert sein. Auch können das optische Element 110 und die Steuereinheit 120 bzw. das optische Element 210 und die Steuereinheit 220 in einem Bauteil integriert sein.

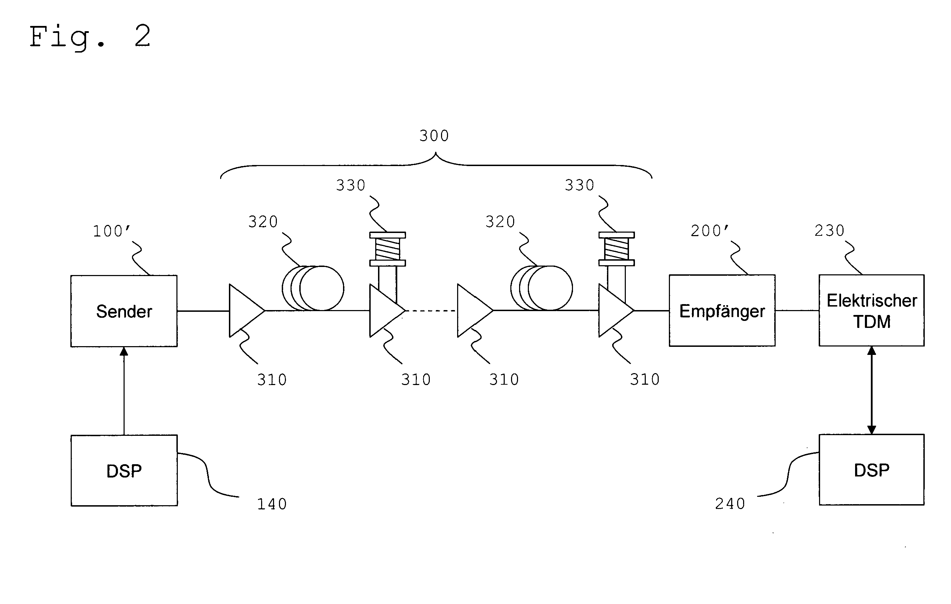

Alternativ zum Einsatz der optischen Elemente 110 und 210 kann das senderseitige Erzeugen eines verschlüsselten optischen Signals, welches eine wellenlängenabhängige Signalverzerrung aufweist, und die korrespondierende empfängerseitige Kompensation der Signalverzerrung auch im elektrischen Bereich erfolgen. Diese alternative Ausführungsform ist in Fig. 2 dargestellt.

Das senderseitige Erzeugen eines verschlüsselten optischen Signals erfolgt durch eine entsprechende Ansteuerung eines im Sender 100' angeordneten Modulators mit einem komplexen, elektrischen Signal durch die Steuereinheit 140. Die Ansteuerung entspricht im wesentlichen einer elektrischen Vorkompensation einer chromatischen Dispersion um einen vorgegebenen Wert, wobei auf diese Weise ein optisches Signal mit adaptierter chromatischer Dispersion erzeugt wird. Das verschlüsselte optische Signal wird über die optische Übertragungsstrecke 300 zum Empfänger 200' übertragen, wobei die chromatische Dispersion auf der Strecke 300 im wesentlichen vollständig kompensiert ist durch einen Aufbau aus Segmenten, die jeweils zwei Verstärker 310, eine zwischen den Verstärkern 310 angeordnete Übertragungsfaser 320, sowie jeweils eine dispersionskompensierende Faser 330 aufweisen.

Die empfängerseitige Kompensation der eingestellten Signalverzerrung erfolgt mittels eines zur Dispersionsanpassung (Tunable Dispersion Module; TDM) ausgebildeten elektrischen Filters 230, welcher dem Empfänger 200' nachgeschaltet ist und durch eine zugeordnete Steuereinheit 240 gesteuert wird.

Auch in der in Fig. 2 dargestellten Ausführungsform können der Sender 100' und die Steuereinheit 140 bzw. wenigstens zwei der empfängerseitigen Komponenten Empfänger 200', elektrischer Filter 230 und Steuereinheit 240 in einem Bauteil integriert sein. Ferner sind die im Zusammenhang mit Fig. 1 beschriebenen Varianten zur zeitlichen Variation des Maßes der wellenlängenabhängigen Signalverzerrung und zum Übertragen eines entsprechenden Synchronisationssignals selbstverständlich in gleicher oder analoger Weise auch in dem in Fig. 2 dargestellten Ausführungsbeispiel einsetzbar.

Im Folgenden wird der sender- und empfängerseitige Aufbau der beiden, in den Figuren 1 und 2 dargestellten Varianten von Datenübertragungssystemen näher beschrieben.

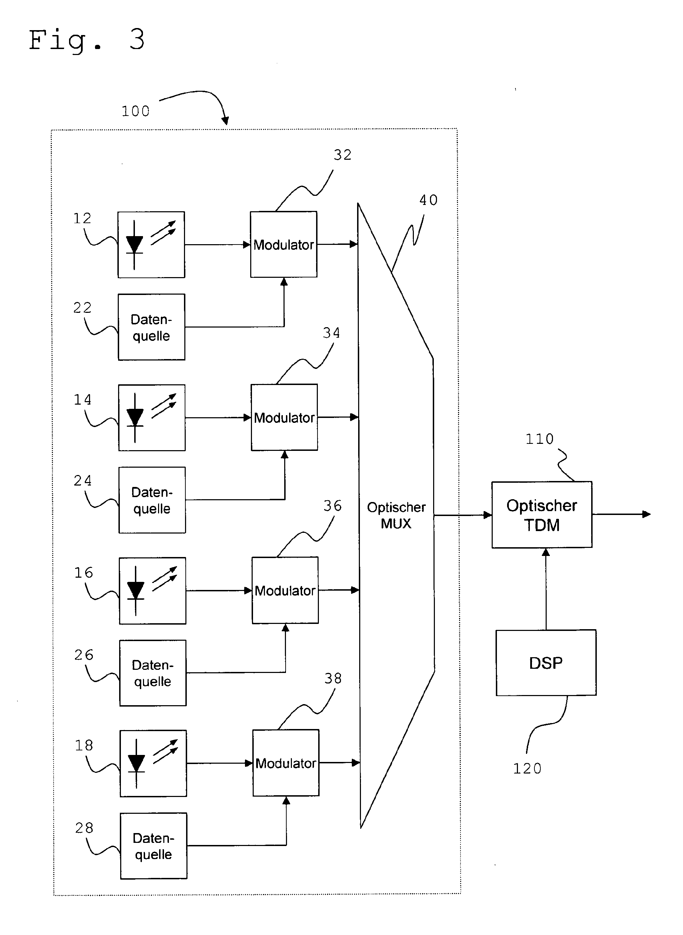

In Fig. 3 ist schematisch ein beispielhafter Aufbau eines optischen Senders 100 des in Fig. 1 gezeigten Übertragungssystems dargestellt. In der dargestellten Ausführungsform weist der Sender 100 vier Sendeeinheiten auf, wobei die Sendeeinheiten jeweils einen Sendelaser 12, 14, 16 bzw. 18 zur Erzeugung eines optischen Signals mit jeweils einer unterschiedlichen vorgegebenen Wellenlänge innerhalb einer vorgegebenen Bandbreite, beispielsweise innerhalb des C-Bandes zwischen 1535 und 1565 nm, umfassen. Ferner umfassen die Sendeeinheiten jeweils einen Modulator 32, 34, 36 bzw. 38, zum Einprägen von Daten, welche jeweils über Datenquellen 22, 24, 26 bzw. 28 mit vorgegebener Datenrate bereitgestellt werden, auf das optische Ausgangssignal des jeweiligen Sendelasers 12, 14, 16 bzw. 18. Die modulierten optischen Ausgangssignale der Modulatoren 32, 34, 36 und 38 werden mit Hilfe eines optischen Multiplexers 40 zu einem optischen Signal zusammengefasst, welches dem optischen Element 110 zugeführt wird.

Das optische Element 110, gesteuert durch die Steuereinheit 120, ist im dargestellten Ausführungsbeispiel zumindest so breitbandig ausgebildet, dass das gesamte Übertragungsband und damit alle Sendekanäle gleichzeitig verschlüsselt werden können.

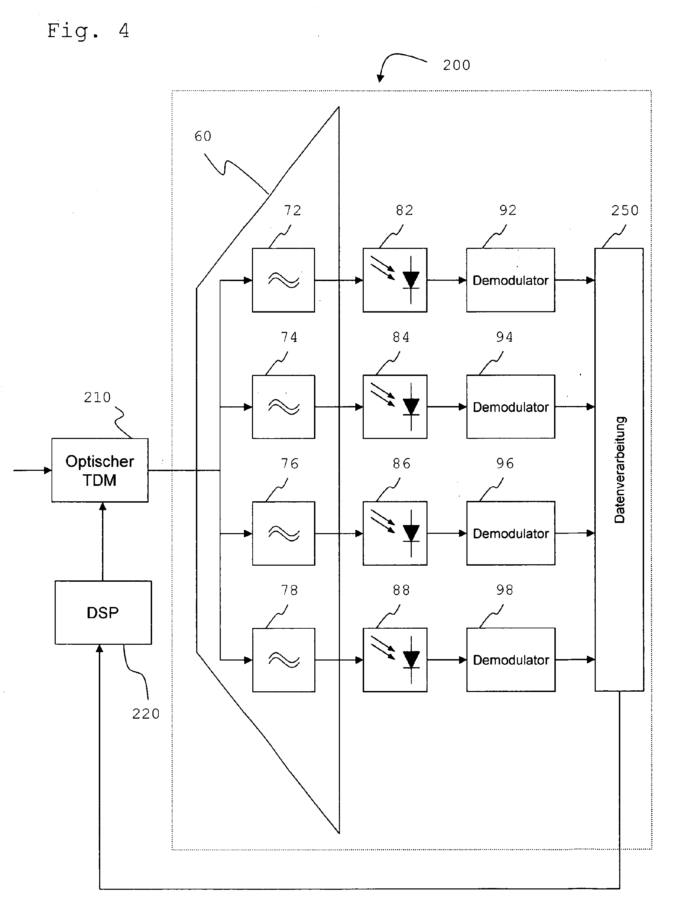

Die Empfängerseite des in Fig. 1 dargestellten Übertragungssystems ist beispielhaft in Fig. 4 gezeigt. Das empfange verschlüsselte optische Signal wird dem optischen Element 210 zugeführt, durch welches das Signal, gesteuert durch die Steuereinheit 220, entschlüsselt oder entzerrt wird. Der Empfänger 200, welcher von dem optischen Element 210 das entzerrte optische Signal empfängt, umfasst einen optischen Demultiplexer 60, welcher für jeden Übertragungskanal jeweils ein optisches Filter 72, 74, 76 bzw. 78 umfasst. Die dargestellte Ausführungsform zeigt einen korrespondierenden Empfänger für einen Sender mit Sendeeinheiten gemäß Fig. 3. Dementsprechend sind die optischen Filter 72, 74, 76 bzw. 78 dazu ausgebildet, die Wellenlänge der jeweiligen Sendelaser zu selektieren. Mittels optischer Sensoren 82, 84, 86 bzw. 88 werden die optischen Signale in elektrische Signale umgewandelt und mit Hilfe der Demodulatoren 92, 94, 96 bzw. 98 demoduliert. Die demodulierten Datensignale werden einer Datenverarbeitung 250 zugeführt. Das mit den übrigen Daten übertragene Synchronisationssignal wird zur Anpassung der Kompensation der zur Verschlüsselung eingesetzten Signalverzerrung von der Datenverarbeitungseinheit 250 zur Steuereinheit 220 übertragen.

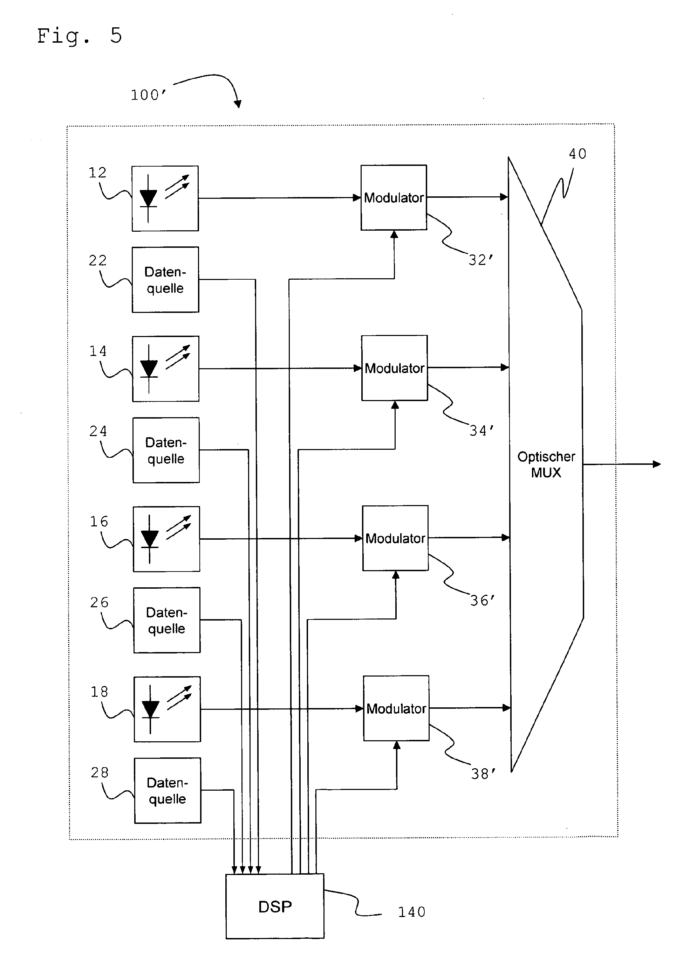

Fig. 5 zeigt beispielhaft die Senderseite des in Fig. 2 dargestellten Übertragungssystems. In diesem Ausführungsbeispiel erfolgt das Erzeugen des verschlüsselten optischen Datensignals durch Ansteuern der im Sender 100' angeordneten Modulatoren 32', 34', 36', und 38'. Zu diesem Zweck werden die zu übertragenden Daten, welche durch die Datenquellen 22, 24, 26 und 28 bereitgestellt werden, der Steuereinheit 140 zugeführt. Aus den zu übertragenden Daten und dem Wert der vorgegebenen wellenlängenabhängigen Signalverzerrung generiert die Steuereinheit 140 ein komplexes Steuersignal zur Ansteuerung der Modulatoren 32', 34', 36' und 38', so dass für jeden Übertragungskanal ein verschlüsseltes optisches Signal direkt durch Modulation des von dem jeweiligen Sendelaser 12, 14, 16 bzw. 18 bereitgestellten optischen Signals erzeugt wird. Zu diesem Zweck sind die Modulatoren 32', 34', 36' und 38' vorzugsweise wenigstens zur Modulation der Amplitude und der Phase eines optischen Signals ausgebildet und entsprechend ansteuerbar. Ferner sind die Modulatoren 32', 34', 36' und 38' vorzugsweise für die Verschlüsselung von Signalen einer fest vorgegebenen Datenrate ausgebildet, da auf diese Weise ein einfacherer Aufbau der Bauteile vorgesehen werden kann.

Die einzeln verschlüsselten Kanäle werden durch einen optischen Multiplexer 40 zu einem optischen Signal zusammengefasst, welches über die Übertragungsstrecke 300 zum Empfänger 200' übertragen wird. Innerhalb eines der verschlüsselten Übertragungskanäle oder über einen separaten Überwachungskanal wird typischerweise wiederum ein Synchronisationssignal übertragen.

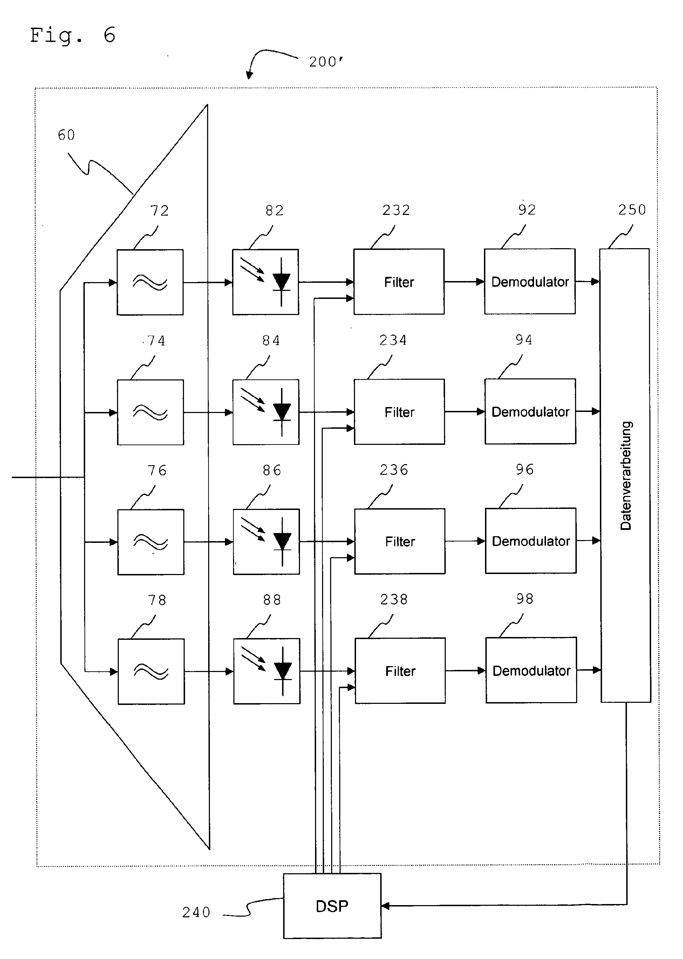

Fig. 6 zeigt beispielhaft die Empfängerseite des in Fig. 2 dargestellten Übertragungssystems, wobei jedoch das elektrische Filter 230 zur Kompensation der Signalverzerrung im Empfänger 200' integriert ist. Der Empfänger 200' weist im wesentlichen den gleichen Aufbau wie der in Fig. 4 dargestellte Empfänger 200 auf. Im Unterschied ist jedoch für jeden Übertragungskanal ein elektrisches Filter 232, 234, 236 bzw. 238 vorgesehen, welches jeweils zwischen einen der optischen Sensoren 82, 84, 86 bzw. 88 und den entsprechenden der Demodulatoren 92, 94, 96 bzw. 98 geschaltet ist. Die als regelbare elektronische Schaltung ausgebildeten Filter 232, 234, 236 und 238 werden durch die Steuereinheit 240 gesteuert, wobei die Steuereinheit 240 empfangene Synchronisationssignale zur Anpassung der Kompensation der senderseitig eingestellten Signalverzerrung von der Datenverarbeitung 250 erhält.

Bei dem in Fig. 2 dargestellten Übertragungssystem wird somit jeder Übertragungskanal individuell verschlüsselt im Gegensatz zu dem in Fig. 1 dargestellten Übertragungssystem, bei dem das gesamte Übertragungsband mit einer Vielzahl von Übertragungskanälen gleichzeitig verschlüsselt wird. Beide Varianten bieten eine erhebliche Zeitersparnis gegenüber herkömmlichen Kodierverfahren, da herkömmliche Verfahren typischerweise nur bei geringen Basisdatenraten funktionieren und somit eine parallele Verarbeitung oder Kodierung mit einer Vielzahl von Komponenten erforderlich machen.

Selbstverständlich kann bei individueller Verschlüsselung der Übertragungskanäle für unterschiedliche Kanäle auch eine unterschiedliche Verschlüsselung vorgesehen sein. Ferner kann die Ver- und Entschlüsselung mittels elektrisch gesteuerter optischer Elemente bzw. mittels gesteuerter Modulation und elektronischer Filter beliebig miteinander kombiniert werden.

## Patentansprüche

1. Verfahren zur verschlüsselten Datenübertragung über eine optische Übertragungsstrecke (300), umfassend die Schritte
- Erzeugen eines mittels einer vorgegebenen wellenlängenabhängigen Signalverzerrung verschlüsselten optischen Datensignals (500),
- Übertragen des verschlüsselten optischen Datensignals über die optische Übertragungsstrecke (300), und
- Entschlüsseln des empfangenen optischen Datensignals (500) durch Kompensieren der vorgegebenen wellenlängenabhängigen Signalverzerrung.

2. Verfahren nach Anspruch 1, wobei die vorgegebene wellenlängenabhängige Signalverzerrung im wesentlichen einer dispersionsbedingten Signalverzerrung entspricht.

3. Verfahren nach einem der vorstehenden Ansprüche, wobei das Erzeugen des verschlüsselten optischen Datensignals (500) durch Verzerren eines von einem optischen Sender (100) generierten unverzerrten optischen Datensignals (400) erfolgt.

4. Verfahren nach einem der vorstehenden Ansprüche, wobei das Erzeugen des verschlüsselten optischen Datensignals (500) und/oder das Entschlüsseln des empfangenen optischen Datensignals (500) mittels eines elektrisch regelbaren, optischen Elementes (110, 210) erfolgt.

5. Verfahren nach Anspruch 4, wobei das optische Element (110, 120) als Fasergitter, virtuell abgebildete Phasenmatrix (VIPA), Phasenmodulator, Gires-Tournois-Etalon oder Mach-Zehnder-Interferometer ausgebildet ist.

6. Verfahren nach einem der vorstehenden Ansprüche, wobei das Erzeugen des verschlüsselten optischen Datensignals (500) eine gesteuerte Modulation des von einer Lichtquelle (12, 14, 16, 18) eines optischen Senders (100') erzeugten Lichtes umfasst.

7. Verfahren nach einem der vorstehenden Ansprüche, wobei das Entschlüsseln des empfangenen optischen Datensignals (500) die Schritte umfasst:
- Umwandeln des empfangenen optischen Signals (500) in ein elektrisches Signal und
- Kompensieren der Signalverzerrung mittels einer regelbaren elektronischen Schaltung (232, 234, 236, 238).

8. Verfahren nach einem der vorstehenden Ansprüche, umfassend die Schritte
- zeitliches Variieren des Maßes der vorgegebenen wellenlängenabhängigen Signalverzerrung, und
- Übertragen eines Synchronisationssignals zum Anpassen der Kompensation der vorgegebenen wellenlängenabhängigen Signalverzerrung an die zeitliche Variation.

9. Verfahren nach Anspruch 8, wobei das verschlüsselte optische Datensignal (500) das Synchronisationssignal umfasst.

10. Verfahren nach Anspruch 8, wobei das Synchronisationssignal über einen optischen Überwachungskanal übertragen wird.

11. Verfahren nach einem der Ansprüche 8 bis 10, wobei sender- und empfängerseitig für das Maß der vorgegebenen wellenlängenabhängigen Signalverzerrung jeweils eine identische Liste mit Werten gespeichert ist und das Synchronisationssignal eine Information umfasst, aus der wenigstens eine Position der Liste ermittelbar ist.

12. Verfahren nach einem der Ansprüche 8 bis 10, wobei sender- und empfängerseitig jeweils eine identische Rechenvorschrift gespeichert ist, mittels derer in Abhängigkeit wenigstens eines Parameters das Maß der vorgegebenen wellenlängenabhängigen Signalverzerrung berechenbar ist und das Synchronisationssignal den wenigstens einen Parameter umfasst.

13. Verfahren nach einem der vorstehenden Ansprüche, wobei senderseitig das Maß der vorgegebenen wellenlängenabhängigen Signalverzerrung in zeitlichen Abständen zufällig festgelegt wird.

14. Datenübertragungssystem zur verschlüsselten optischen Datenübertragung, umfassend
- einen Sender (100, 100'), der über eine optische Übertragungsstrecke (300) mit einem Empfänger (200, 200') verbunden ist,
- senderseitige Mittel (110, 120, 140) zum Erzeugen eines durch eine vorgegebene wellenlängenabhängige Signalverzerrung verschlüsselten optischen Datensignals (500), und
- empfängerseitige Mittel (210, 220, 230, 240) zum Entschlüsseln eines empfangenen optischen Datensignals (500) durch Kompensieren der vorgegebenen wellenlängenabhängigen Signalverzerrung.

15. System nach Anspruch 14, wobei die senderseitigen Mittel (110, 120) zum Erzeugen eines verschlüsselten optischen Signals (500) ein zwischen den Sender (100) und die Übertragungstrecke (300) geschaltetes elektrisch regelbares, optisches Element (110) umfassen.

16. System nach einem der vorstehenden Ansprüche, wobei die empfängerseitigen Mittel (210, 220) zum Entschlüsseln eines verschlüsselten optischen Signals (500) ein zwischen die Übertragungstrecke (300) und den Empfänger (200) geschaltetes elektrisch regelbares, optisches Element (210) umfassen.

17. System nach einem der Ansprüche 15 oder 16, wobei das optische Element (110, 210) als Fasergitter, virtuell abgebildete Phasenmatrix (VIPA), Phasenmodulator, Gires-Tournois-Etalon oder Mach-Zehnder-Interferometer ausgebildet ist.

18. System nach einem der vorstehenden Ansprüche, wobei der Sender (100') wenigstens einen optischen Modulator (32', 34', 36', 38') umfasst und die senderseitigen Mittel (140) zum Erzeugen eines verschlüsselten optischen Signals Mittel zum elektrischen Ansteuern des Modulators (32', 34', 36', 38') umfassen, die dazu ausgebildet sind, in Abhängigkeit zu übertragender Daten ein Steuersignal zu erzeugen, das ein Erzeugen eines mit einer vorgegebenen wellenlängenabhängigen Signalverzerrung verschlüsselten optischen Datensignals (500) durch den Modulator (32', 34', 36', 38') bewirkt.

19. System nach einem der vorstehenden Ansprüche, umfassend empfängerseitige Mittel (82, 84, 86, 88) zum Umwandeln eines verschlüsselten optischen Signals (500) in ein verschlüsseltes elektrisches Signal und wenigstens eine regelbare elektronische Schaltung (232, 234, 236, 238) zum Kompensieren der Signalverzerrung des elektrischen Signals.

20. System nach einem der vorstehenden Ansprüche, wobei die senderseitigen Mittel (110, 120, 140) zum Erzeugen eines verschlüsselten optischen Datensignals (500) dazu ausgebildet sind, das Maß der vorgegebenen wellenlängenabhängigen Signalverzerrung zeitlich zu variieren und ein mit der zeitlichen Variation korrespondierendes Synchronisationssignal zu erzeugen und zum Empfänger (200, 200') zu senden, und die empfängerseitigen Mittel (210, 220, 230, 240) zum Entschlüsseln eines empfangenen optischen Datensignals automatisch regelbar in Antwort auf Empfang des Synchronisationssignals ausgebildet sind.

21. System nach einem der vorstehenden Ansprüche, umfassend jeweils einen sender- und empfängerseitigen Speicher, in denen jeweils identische Auswahllisten zur Auswahl des Maßes der vorgegebenen wellenlängenabhängigen Signalverzerrung abgelegt sind.

22. System nach einem der vorstehenden Ansprüche, umfassend jeweils einen sender- und empfängerseitigen Speicher, in denen jeweils identische Rechenvorschriften zur Berechnung des Maßes der vorgegebenen wellenlängenabhängigen Signalverzerrung abgelegt sind.

23. System nach einem der vorstehenden Ansprüche, umfassend einen senderseitigen Zufassgenerator zur zufälligen Festlegung des Maßes der vorgegebenen wellenlängenabhängigen Signalverzerrung.
